# EUROPÄISCHE PATENTSCHRIFT

(11) **EP 0 640 838 B1**
(45) Veröffentlichungstag und Bekanntmachung des Hinweises auf die Patenterteilung: **08.01.1997**
(21) Anmeldenummer: 93113671.7
(22) Anmeldetag: 26.08.1993
(51) Int. Cl.: G01P 3/487

(54) **Welle mit darauf konzentrisch gehaltenem Magnetkörper**
Shaft with a concentric magnetic body supported thereon
Arbre avec un corps magnétique concentrique supporté par celui-ci

(43) Veröffentlichungstag der Anmeldung: 01.03.1995
(73) Patentinhaber: SIEMENS AKTIENGESELLSCHAFT, 80333 München (DE)
(72) Erfinder: Fiedler, Rudolf, Dipl.-Ing., D-97980 Bad Mergentheim (DE); Schenk, Manfred, D-97246 Eibelstadt (DE)

(56) Entgegenhaltungen:
- EP-A- 0 308 647
- EP-A- 0 489 940
- DE-A- 2 915 171
- DE-A- 3 718 047
- DE-U- 9 006 935
- GB-A- 2 113 016
- PATENT ABSTRACTS OF JAPAN, vol. 6, no. 18 (P-100) 2. Februar 1982 ; & JP-A-56 140 259

## Beschreibung

Die Erfindung bezieht sich auf eine Welle mit darauf konzentrisch gehaltenem Magnetkörper; Antriebe mit einem derartig auf einer Rotorwelle eines motorischen Antriebs befestigten Polrad als Magnetkörper zur Erzeugung eines drehzahlproportionalen Signals in einer statorseitigen Hallsondenvorrichtung sind z.B. zum Einsatz für drehzahlgesteuerte bzw. drehrichtungsgesteuerte Fensterheberantriebe bzw. vergleichbare Getriebe-Verstellmotoren in Kraftfahrzeugen vorgesehen.

Durch die EP-A1-0 308 647 ist eine Befestigung zwischen einer Rotorwelle und einem darauf konzentrisch gehaltenen Magnetkörper bekannt, wobei der Magnetkörper in einen auf den Umfang der Rotorwelle aufgespritzten Kunstoffring eingebettet ist; zur besseren Momentenmitnahme zwischen der Rotorwelle einerseits und dem Kunststoffring andererseits ist dieser gleichzeitig um ein zuvor auf die Rotorwelle unter Bildung von axial eingegrabenen Schleifspuren aufgepreßtes metallenes Zwischenteil in Form einer Sechskantmutter gespritzt.

Durch die EP-A1-0 489 940 ist ein Kommutatormotor bekannt, bei dem zur Drehzahlregelung auf einer statorseitigen Elektronik-Anschlußplatte Hallsonden angeordnet sind, denen ein unmittelbar auf der Rotorwelle befestigtes Polrad zugeordnet ist. Die Befestigung des Polrades auf der Rotorwelle kann z.B. durch einen entsprechenden Preßsitz und/oder Klebesitz erfolgen.

Durch die DE-U1-90 06 935 ist ein elektromotorischer Antrieb, insbesondere für ein Kraftfahrezug, mit einem Kommutator und einem zur Drehzahl- und/oder Drehrichtungserfassung auf der Rotorwelle angeordneten, mit einem statorseitigen Hallsensor zusammenwirkenden magnetischen Polrad bekannt, wobei zur Halterung des Polrades auf der Rotorwelle zunächst eine in Umfangsrichtung und radial in sich steife, gleichzeitig als Rückschlußring vorgesehene Distanzbuchse auf die Rotorwelle drehfest aufgesetzt ist und dann das Polrad konzentrisch zur Distanzbuchse auf dessen Außenumfang entweder aufgepreßt oder aufgesteckt bzw. aufgeklebt oder mit Formschluß befestigt ist; zur Formschluß-Befestigung ist die Distanzbuchse am Außenumfang mit einer Abflachung einerseits und das Polrad an der korrespondierenden Innenseite mit einer entsprechenden Abflachung andererseits versehen. Zur axialen Fixierung liegt die Distanzbuchse mit ihrer einen Stirnseite am Kommutator an und ist an ihrer anderen Stirnseite mit Hilfe eines formschlüssig in die Rotorwelle einsetzbaren Sicherungsringes festgelegt. Das magnetische Polrad kann aus einem Kunststoffkörper mit kunststoffgebundenen Magnet-Partikeln oder aus einem nichtmagnetischen Grundkörper bestehen, in den Permanentmagnete eingesetzt sind.

Durch die DE-U1-88 11 966 ist weiterhin ein elektromotorischer Antrieb, insbesondere ein Verstellantrieb für ein Kraftfahrzeug, bekannt, bei dem das Polrad für einen Drehzahlgeber aus einem Kunststoffkörper mit kunststoffgebundenen Magnet-Partikeln besteht, der unmittelbar axial auf die Rotorwelle aufgepreßt ist und dazu eine von der Rundform abweichende Vielkant-Wellenbohrung aufweist, deren minimalster Durchmesser kleiner und deren maximalster Durchmesser größer ist als der Durchmesser der Rotorwelle.

Der Erfindung liegt die Aufgabe zugrunde, für einen Magnetkörper, vorzugsweise ein Polrad hoher Polzahl für einen Drehzahlgeber, mit fertigungs- und montagetechnisch einfachen Mitteln eine auch bei längerem und hartem Betriebseinsatz sowie größerem Wärmespiel sichere Fixierung auf der Rotorwelle gewährleisten zu können. Die Lösung dieser Aufgabe gelingt durch die Lehre des Anspruchs 1; vorteilhafte Ausgestaltungen der Erfindung sind jeweils Gegenstand der abhängigen Patentansprüche.

Bei dem erfindungsgemäßen motorischen Antrieb ist es möglich, ohne die Notwendigkeit enger Toleranzen für die gegenseitig zu montierenden Bauteile der Buchse bzw. des Magnetkörpers einerseits und der Welle andererseits sowie eines dafür ansonsten notwendigen, für die Serienproduktion eines Massenartikels unvorteilhaften Aufwandes an Werkzeugen und Kontrollmaßnahmen den Magnetkörper in einfacher, zum Einsatz von Manipulatoren geeigneter Montagemöglichkeit auch bei mit großem Wärmespiel behaftetem Betriebseinsatz auf der Welle sicher zu fixieren, wobei die gesamte Umfangsfläche des Magnetkörpers für eine Aufmagnetisierung im Sinne einer dichten Polfolge und somit hohen Polzahl zur Verfügung steht. Durch die tangentiale bzw. radiale Elastizität der metallenen Buchse bleiben fertigungsbedingte Toleranzunterschiede ohne Einfluß auf den Preßsitz der metallenen Buchse relativ zur Welle; durch die radial zwischen dem äußeren Magnetkörper einerseits und der inneren metallenen Buchse andererseits vorgesehene Kunststoff-Nabe wird eine unerwüschte Übertragung von Temperaturverformungen der Welle bzw. der Buchse auf den Magnetkörper verhindert.

In fertigungstechnisch besonders vorteilhafter Weise besteht die metallene Buchse aus einem gerollten Stahlblech mit gegenüber dem Außendurchmessers der Welle geringerem Durchmesser und einer tangentialen bzw. radialen Elastizität zur Erzielung eines Preßsitzes beim Aufziehen der aus Magnetkörper, Kunststoff-Nabe sowie metallener Buchse bestehenden Bauteileinheit vorzugsweise dadurch, daß die beim Rollen des Stahlbleches voreinanderliegenden Längskanten durch eine spielbehaftete schwalbenschwanzartige Verklinkung verbunden sind und somit sich beim Aufziehen auf die Welle um ein geringeres Maß tangential bzw. radial aufweiten können; eine solche Weitungsmöglichkeit wird nach einer Ausgestaltung der Erfindung in vorteilhafter Weise dadurch unterstützt, daß die um die metallene Buchse gespritzte Kunststoff-Nabe über ihren Umfang verteilt derartige Ausnehmungen aufweist, daß einerseits eine hinreichende Festigkeit zur Fixierung des radial äußeren Magnetkörpers gewährleistet ist, jedoch andererseits die Kunststoff-Nabe in radialer Richtung in sich bei der tangentialen bzw. radialen geringen Dehnung der metallenen Buchse beim Aufziehen auf die Rotorwelle elastisch nachgiebig ist.

Die Preßsitzkräfte zwischen der metallenen Buchse und der Welle können dadurch minimiert werden, daß nach einer weiteren Ausgestaltung der Erfindung die metallene Buchse mit vorzugsweise einstückig angestanzten axial vorstehenden Abstandsarmen versehen ist, an deren freie Enden in Richtung auf die Welle gerichtete Krallen angeformt sind, die beim Aufziehen der metallenen Buchse mit der darauf aufgespritzten Kunstsstoff-Nabe und dem darauf befestigten Magnetkörper in einen auf der Welle umlaufenden Einstich einschnappen; dadurch kann die Sicherung gegen ein axiales Verschieben der aus metallener Buchse, Kunstoff-Nabe und Magnetkörper bestehenden Bauteileinheit allein von den in den Wellen-Einstich eingreifenden Krallen übernommen und durch deren radialen Andruck an die Welle im Bereich des Welleneinstich auch zumindest ein Teil der Kraft für eine tangentiale Verdrehsicherheit der Bauteileinheit übernommen werden.

Da üblicherweise die Polräder für eine Drehzahlüberwachungs- bzw. Regelvorrichtung eines motorischen Antriebes axial in Nähe der Lagerung der Welle angebracht sind, von der sie aufgenommen werden, ist nach einer weiteren Ausgestaltung der Erfindung vorgesehen, die freien Enden der Abstandsarme gleichzeitig als axiale Anschlagsicherung für ein axial dagegen abstützbares Wellenlager vorzusehen, derart daß das Wellenlager beim Aufziehen auf die Welle in einfacher Weise durch die axial durch Einrasten der Krallen in den Welleneinstich fixierte metallene Buchse gleichzeitig axial festgelegt werden kann.

Die Erfindung sowie weitere vorteilhafte Ausgestaltungen der Erfindung werden im folgenden anhand eines schematisch dargestellten Ausführungsbeispiels in der Zeichnung näher erläutert; darin zeigen:
- FIG 1: in einem axialen Schnittbild einen Teilausschnitt der Wellenlagerung eines Motorantriebes mit auf der Welle befestigtem Magnetkörper,

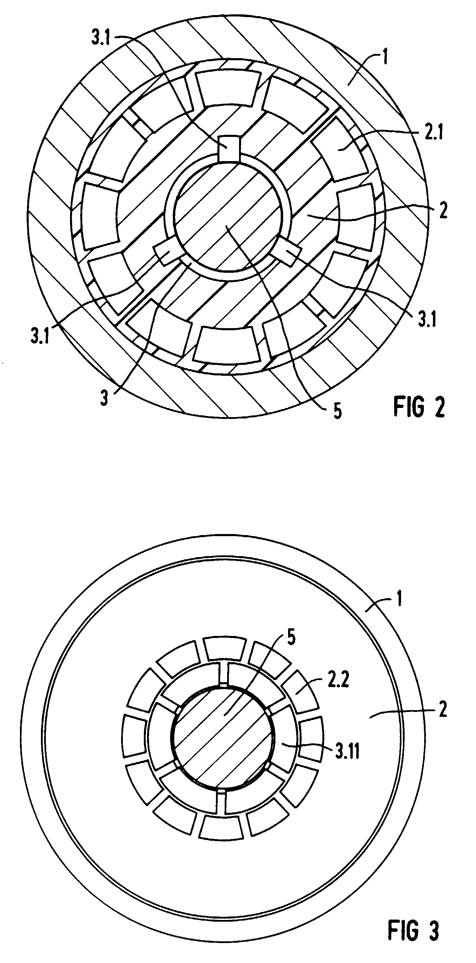

- FIG 2: die Anordnung gemäß FIG 1 im Schnittverlauf II-II,
- FIG 3: die Anordnung gemäß FIG 1 im Schnittverlauf III-III, jedoch unter Weglassung des Motorgehäuses,
- FIG 4: in perspektivischer Darstellung die erfindungsgemäß zur Halterung des Magnetkörpers vorgesehne metallene Buchse.

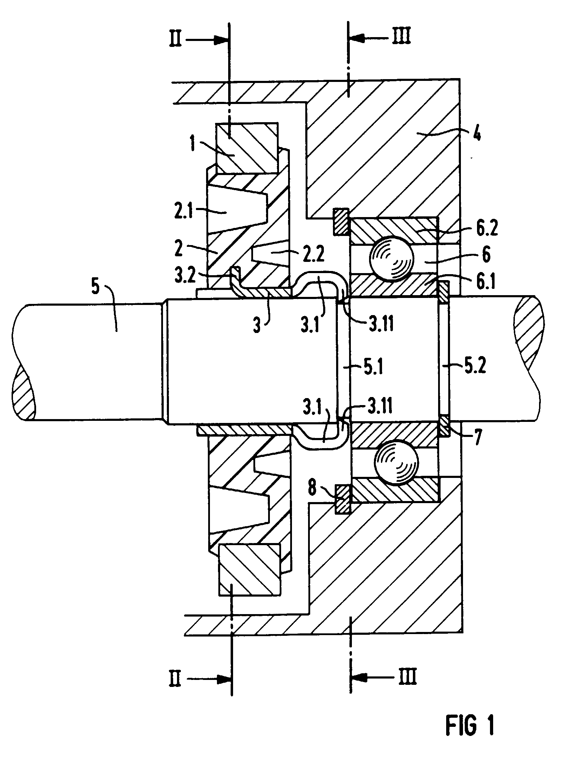

FIG 1 zeigt in einem Teilausschnitt das rechte Ende eines Motorgehäuses 4, in dem über ein als Kugellager ausgebildetes Wellenlager 6 eine Welle 5 gelagert ist. Axial vor dem Wellenlager 6 wird von der Welle 5 eine Bauteileinheit bestehend aus einem radial äußeren Magnetkörper 1, einer radial inneren auf der Welle 5 in leichtem Preßsitz aufgeschobenen metallenen Buchse 3 und einer dazwischen liegenden Kunststoff-Nabe 2 radial, axial und tangential fixiert gehalten. Der Magnetkörper 1 besteht vorzugsweise aus einem Kunststoffring mit kunststoffgebunden Magnetpartikeln und ist in Umfangrichtung mehrpolig magnetisiert.

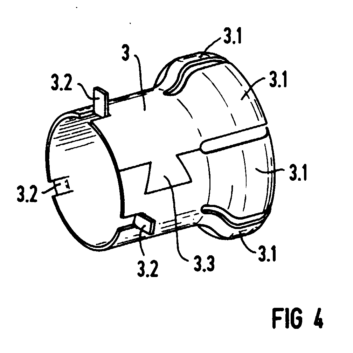

Die metallene Buchse 3 besteht - wie insbesondere aus FIG 4 ersichtlich - aus einem gerollten Stahlblechteil, dessen tangential voreinanderliegende Kanten durch eine spielbehaftete schwalbenschwanzartige Verklinkung 3.3 derart miteinander verklinkt sind, daß der auf die Welle 5 aufgeschobene Teil der metallene Buchse 3 unter Ausgleich der fertigungsbedingten Toleranzen im leichten Preßsitz auf die Welle 5 aufschiebbar ist und sich dabei um ein geringes tangentiales bzw. radiales Maß aufweiten kann. Wie insbesondere aus FIG 1 ersichtlich, ist die metallene Buchse 3 von einer Kunststoff-Nabe 2 umspritzt, die radial außen den Magnetkörper 1 aufnimmt. Zur zusätzlichen formschlüssigen Verklinkung zwischen der metallenen Buchse 3 einerseits und der Kunststoff-Nabe 2 andererseits dienen Radiallappen 3.2, die stirnseitig aus der metallenen Buchse 3 freigestanzt und zur Kunststoff-Nabe 2 hochgebogen sind.

Um beim Aufziehen der aus Magnetring 1, Kunststoff-Nabe 2 und metallener Buchse 3 bestehenden Bauteileinheit auf die Welle 5 gegebenenfalls eine gewisse elastische Nachgiebigkeit der metallenen Buchse 3 zu unterstützen, sind in vorteilhafter Weise in der Kunststoff-Nabe 2, vorzugsweise in ihren Stirnseiten, radial gegeneinander versetzte Ausnehmungen 2.1 bzw. 2.2 derart vorgesehen, daß einerseits eine abstandsgenaue Fixierung des Magnetkörpers 1 gewährleistet jedoch andererseits auch eine innere radiale Elastizität der Kunststoff-Nabe 2 gegeben ist.

Nach einer besonders vorteilhaften Ausgestaltung der Erfindung sind an die metallene Buchse 3 axial vorstehende Abstandsarme 3.1, vorzugsweise einstückig, angeformt, die als axialer Anschlag für das Wellenlager 6 dienen, derart daß z.B. bei Verwendung eines Kugellagers auf einen gesonderten Sicherungsring für das eine axiale Ende der Innenschale 6.1 des Kugellagers 6 verzichtet werden kann, wie sie üblicherweise für das andere axiale Ende der Innenschale 6.1 als Sicherungsring 7 in einem Wellen-Einstich 5.2 bzw. für das eine axiale Ende der Außenschale 6.2 als Sicherungsring 8 vorgesehen werden müssen.

Nach einer weiteren Ausgestaltung der Erfindung sind die Abstandsarme 3.1 an ihren freien Enden mit wellenseitig gerichteten Krallen 3.11 versehen, die in einen korrespondierenden Wellen-Einstich 5.1 einschnappen; durch die derart radial vorgespannnten, vorzugsweise einstückig mit der metallenen Buchse 3 und den Abstandsarmen 3.1 angestantzten und abgebogenen, Krallen 3.11 wird einerseits eine axiale Lagerungssicherung auf der Welle 5 sowohl für die metallene Buchse 3 und somit die Kunststoff-Nabe 2 und den Magnetkörper 1 als auch für die Innenschale 6.1 des Wellenlagers 6 erreicht und andererseits durch die Schließkraft der Krallen 3.11 auf die Welle 5 im Bereich des Welleneinstichs 5.1 ein Beitrag zur Verdrehsicherheit der metallenen Buchse 3 relativ zur Welle 5 erreicht.

## Patentansprüche

1. Welle (5) mit darauf konzentrisch gehaltenem Magnetkörper (1), insbesondere für einen motorischen Hilfsantrieb in einem Kraftfahrzeug, mit den Merkmalen:
a) Der Magnetkörper (1) ist am Außenumfang einer Kunststoff-Nabe (2) angeordnet,
b) die Kunststoff-Nabe (2) ist berührungsfrei zu der Welle (5) auf dem Außenumfang einer metallenen Buchse (3) angeordnet,
c) die metallene Buchse (3) ist unter elastischer Tangential- bzw Radialspannung auf dem Außenumfang der Welle (5) gehalten.

2. Welle nach Anspruch 1 mit dem Merkmal:
d) Die metallene Buchse (3) besteht aus einem gerollten Stahlblech mit gegenüber dem Außendurchmesser der Welle (5) geringerem Innendurchmesser und einer tangentialen bzw. radialen Elastizität zur Erzielung eines Preßsitzes beim Aufziehen einer aus Magnetkörper (1), Kunststoff-Nabe (2) sowie metallener Buchse (3) bestehenden Bauteileinheit auf die Welle (5).

3. Welle nach Anspruch 1 oder 2 mit dem Merkmal:
e) Die metallene Buchse (3) besteht aus einem gerollten Stahlblech mit durch eine spielbehaftete schwalbenschwanzartige Verklinkung (3.3) verbundenen, in Umfangsrichtung voreinander liegenden axialen Längskanten.

4. Welle nach einem der Ansprüche 1-3 mit dem Merkmal:
f) Die metallene Buchse (3) ist von der Kunststoff-Nabe (2) umspritzt.

5. Welle nach einem der Ansprüche 1-4 mit dem Merkmal:
g) Die Kunststoff-Nabe (2) ist, insbesondere durch über den Umfang verteilte Ausnehmungen (2.1;2.2), in radialer Richtung in sich elastisch ausgebildet.

6. Welle nach einem der Ansprüche 1-5 mit dem Merkmal:
h) Die metallene Buchse (3) ist mit der Kunststoff-Nabe (2) formschlüssig, insbesondere mittels in die Kunststoff-Nabe (2) reichender buchsenseitiger Radiallappen (3.2), verklinkt.

7. Welle nach einem der Ansprüche 1-6 mit dem Merkmal:
i) Die metallene Buchse (3) ist mit axial vorstehenden freien Abstandsarmen (3.1) versehen.

8. Welle nach Anspruch 7 mit dem Merkmal:
j) Die freien Enden der Abstandarme (3.1) greifen mit wellenseitig gerichteten Krallen (3.11) in einen korrespondierenden Wellen-Einstich (5.1) ein.

9. Welle nach einem der Ansprüche 7 bzw. 8 mit dem Merkmal:
k) Die Abstandarme (3.1) sind, vorzugsweise einstückig mit der metallenen Buchse (3) und den Krallen (3.11), elastisch in Richtung auf die Welle (5) vorgespannt ausgebildet.

10. Welle nach einem der Ansprüche 7-9 mit dem Merkmal:
l) Die freien Enden der Abstandsarme (3.1) sind.als axiale Anschlagmittel für ein axial dagegen abstützbares Wellen-Lager (6) vorgesehen.

## Claims

1. Shaft (5) having a magnet body (1) which is held concentrically on it, in particular for an auxiliary motor drive in a motor vehicle, having the features,
a) the magnet body (1) is arranged on the outer circumference of a plastic hub (2),
b) the plastic hub (2) is arranged, without touching the shaft (5), on the outer circumference of a metallic bush (3),
c) the metallic bush (3) is held on the outer circumference of the shaft (5) by elastic tangential and/or radial stress.

2. Shaft according to Claim 1 having the feature:
d) the metallic bush (3) comprises a rolled steel sheet having an internal diameter which is smaller than the external diameter of the shaft (5), and having tangential and/or radial elasticity in order to achieve a push fit when a component unit, which comprises the magnet body (1), the plastic hub (2) and the metallic bush (3), is pushed onto the shaft (5).

3. Shaft according to Claim 1 or 2 having the feature:
e) the metallic bush (3) comprises a rolled steel sheet having axial longitudinal edges which are located one in front of the other in the circumferential direction and are connected by means of a catch (3.3) which is like a dovetail and has play.

4. Shaft according to one of Claims 1-3 having the feature:
f) the metallic bush (3) has the plastic hub (2) extrusion-coated on it.

5. Shaft according to one of Claims 1-4 having the feature:
g) the plastic hub (2) is designed to be intrinsically elastic in the radial direction, in particular as a result of recesses (2.1; 2.2) which are distributed over the circumference.

6. Shaft according to one of Claims 1-5 having the feature:
h) the metallic bush (3) is latched in a positively locking manner to the plastic hub (2), in particular by means of radial lugs (3.2) which are on the bush side and extend into the plastic hub (2).

7. Shaft according to one of Claims 1-6 having the feature:
i) the metallic bush (3) is provided with axially projecting, free spacer arms (3.1).

8. Shaft according to Claim 7 having the feature:
j) the free ends of the spacer arms (3.1) have claws (3.11) which are directed towards the shaft side and engage in a corresponding shaft notch (5.1).

9. Shaft according to one of Claims 7 or 8 having the feature:
k) the spacer arms (3.1) are designed, preferably integrally with the metallic bush (3) and the claws (3.11), to be prestressed elastically in the direction of the shaft (5).

10. Shaft according to one of Claims 7-9 having the feature:
l) the free ends of the spacer arms (3.1) are provided as axial stop means for a shaft bearing (6) which can be supported axially against them.

## Revendications

1. Arbre (5) sur lequel est retenu concentriquement une pièce (1) magnétique, notamment pour une propulsion auxiliaire motorisée d'un véhicule automobile, ayant les caractéristiques :
a) la pièce (1) magnétique est disposée sur la périphérie d'un moyeu (2) en matière plastique,
b) le moyeu (2) en matière plastique est disposé sans toucher l'arbre (5) sur la périphérie d'une douille (3) métallique,
c) la douille (3) métallique est maintenue sous contrainte élastique tangentielle ou radiale sur la périphérie de l'arbre (5).

2. Arbre suivant la revendication 1, caractérisé en ce que la douille (3) métallique est constituée d'une tôle d'acier enroulée de diamètre intérieur plus petit que le diamètre extérieur de l'arbre et ayant une élasticité tangentielle ou radiale pour obtenir un ajustement serré lorsque l'on emmanche sur l'arbre (5) une unité constituée de la pièce (1) métallique, du moyeu (2) en matière plastique, ainsi que de la douille (3) métallique.

3. Arbre suivant la revendication 1 ou 2, ayant la caractéristique :
d) la douille (3) métallique est constituée d'une tôle d'acier enroulée ayant des bords longitudinaux axiaux reliés par un encliquetage (3.3) en queue d'aronde avec jeu et se trouvant l'un devant l'autre dans la direction de la périphérie.

4. Arbre suivant l'une des revendications 1 à 3 ayant la caractéristique :
f) la douille (3) métallique est recouverte par injection du moyeu (2) en matière plastique.

5. Arbre suivant l'une des revendications 1 à 4 ayant la caractéristique :
g) le moyeu (2) en matière plastique est constitué de manière à être en soi élastique dans la direction radiale, notamment par des évidement (2.1 ; 2.2) répartis sur la périphérie.

6. Arbre suivant l'une des revendications 1 à 5, ayant la caractéristique :
h) la douille (3) métallique est encliquetée, avec complémentarité de forme, avec le moyeu (2) en matière plastique, notamment au moyen de pattes (3.2) radiales, se trouvant du côté de la douille et allant dans le moyeu (2) en matière plastique.

7. Arbre suivant l'une des revendications 1 à 6, ayant la caractéristique :
i) la douille (3) métallique est munie de bras (3.1) libres de maintien à distance faisant saillie axialement.

8. Arbre suivant la revendication 7, ayant la caractéristique :
j) les extrémités libres des bras (3.1) de maintien à distance pénètrent par des griffes (3.11) dirigées du côté de l'arbre dans une encoche (5.1) correspondante de l'arbre.

9. Arbre suivant l'une des revendications 7 ou 8, ayant la caractéristique :
k) les bras (3.1) de maintien à distance sont de préférence d'une pièce avec la douille (3) métallique et les griffes (3.11), en étant mis élastiquement sous précontrainte dans la direction de l'arbre (5).

10. Arbre suivant l'une des revendications 7 à 9, ayant la caractéristique :
l) les extrémités libres des bras (3.1) de maintien à distance sont prévues sous forme de moyens axiaux de butée pour un palier (6) d'arbre pouvant s'y appuyer axialement.
